(19) Europäisches Patentamt
European Patent Office
Office européen des brevets

(11) Publication number: **0 142 336**
**A1**

# (12) EUROPEAN PATENT APPLICATION

(21) Application number: 84307724.9

(22) Date of filing: 08.11.84

(51) Int. Cl.⁴: C 08 L 67/02
//(C08L67/02, 51:00)

(30) Priority: 10.11.83 JP 211604/83

(43) Date of publication of application: 22.05.85 Bulletin 85/21

(84) Designated Contracting States: BE DE GB IT NL

(71) Applicant: POLYPLASTICS CO. LTD.
30 Azuchimachi 2-chome
Higashi-ku Osaka-shi(JP)

(72) Inventor: Kasuga, Takuzo
324, Miyashita
Fuji-shi Shizuoka(JP)

(72) Inventor: Takahashi, Katsuhiko
324, Miyashita
Fuji-shi Shizuoka(JP)

(72) Inventor: Tajima, Yoshihisa
52, Morishita
Fuji-shi Shizuoka(JP)

(74) Representative: Tebbit, Antony Hugh Edward et al,
HYDE, HEIDE & O'DONNELL 146 Buckingham Palace Road
London SW1W 9TR(GB)

## (54) Polybutylene terephthalate composition.

(57) In order to improve impact resistance of polybutylene terephthalate resins, (a) a polyacrylate resin and (b) a thermoplastic segment-type copolyester are introduced as modifiers into the resin composition.

EP 0 142 336 A1

POLYBUTYLENE TEREPHTHALATE COMPOSITION

The present invention relates to a polybutylene terephthalate resin composition.

Polybutylene terephthalate resins have excellent mouldability, and outstanding mechanical, thermal, and electrical properties; and accordingly they are widely used in various fields of application, such as machine parts, electrical components and other functional parts. Further, polybutylene terephthalate resin articles free from surface defects have very good impact-resisting properties. However, the impact resistance of an article formed of a polybutylene terephthalate resin may be noticeably worsened, for example, by any crack made in it when a metallic part is inserted into it or by any flaw caused during a cutting operation. Again, where such article has a sharp-edged portion, the impact resistance of the article at the sharp edge may be low, even if the article is defect-free. This phenomenon may be explained in terms of izod impact strength. That is, the article has an impact strength of the order of 200 kg cm/cm, if unnotched, but its impact strength is only of the order of 2 - 3 kg cm/cm, where notched. This clearly demonstrates the extent to which the impact strength can be worsened by flaws or the like.

Attempts have been made to lower the sensitivity of polybutylene terephthalate resins to notching by adding various modifiers to polybutylene terephthalate. The low impact resistance of polybutylene terephthalate resins when notched may be more or less improved by those modifiers, but the degree of such improvement cannot be said to be sufficient for some areas of application.

Accordingly, in order to improve the low impact resistance of polybutylene terephthalate resins, and more particularly the notch sensitivity thereof, the present inventors examined the effects of various materials upon polybutylene terephthalate. As a result, they found that addition of two kinds of impact resistance modifiers in specific proportions provides a synergistic effect and remarkably improve the impact resistance. The present invention, based on this finding, provides a polybutylene terephthalate composition comprising a polybutylene terephthalate resin which contains (a) a modifier composed of a polyacrylate resin, and (b) a modifier composed of a thermoplastic segment-type copolyester.

The polybutylene terephthalate resin used for the purpose of the invention may be any polybutylene terephthalate resin or any resin principally of polybutylene terephthalate, such as a copolymer thereof or a mixture therewith. By way of example, such mixture may be a polybutylene terephthalate/polyethylene terephthalate mixed resin composition.

The modifier (a) composed of a polyacrylate resin as used for the purpose of the invention preferably contains units in which the polyacrylate resin is derived from $C_1$~$C_6$ alkyl acrylate. The polyacrylate in such modifier is preferably composed of a multi-stage polymer having a rubber-like first stage and a thermoplastically rigid final stage. By way of example, a preferred multi-stage polymer is such that the rubber-like first stage is butyl acrylate and the final stage is methyl methacrylate, with allyl methacrylate or diallyl maleate used as a graft binder. Depending upon the end use, a styrene polymer may be used as an intermediate layer.

The modifier (b) composed of a thermoplastic segment-type copolyester as used for the purpose of the invention is preferably composed of a multiplicity of repeated long-chain ester units and short-chain ester units as bound together by head-to-tail linkage with respect to ester chains as a whole, said long-chain ester unit being expressed by the formula

$$- OXO - \overset{O}{\overset{\|}{C}} - R - \overset{O}{\overset{\|}{C}} - \qquad (I)$$

and said short-chain ester unit being expressed by the formula

$$-OYO-\overset{\overset{O}{\|}}{C}-R-\overset{\overset{O}{\|}}{C}- \qquad (II)$$

In formulas (I) and (II), X represents a bivalent group remaining after removal of end hydroxyl groups from a polyalkylene oxide glycol having a melting point of about 60°C or below, a molecular weight of about 400 - 4000, and a carbon to oxygen ratio of about 2.5 - 4.3; R represents a bivalent group remaining after removal of carboxyl groups from a dicarboxylic acid having a molecular weight of about 300 or less; and Y represents a bivalent group remaining after removal of hydroxyl groups from a diol having a molecular weight of about 250 or less.

Preferably, each or nearly every R is a group remaining after removal of carboxyl groups from terephthalic acid or a group remaining after removal of carboxyl groups from a mixture of terephthalic acid with isophthalic acid or phthalic acid; X is a group remaining after removal of end hydroxyl groups from a polytetramethylene oxide glycol having a molecular weight of 600 - 2000; and each or nearly every Y having a molecular weight of 250 or below is a group remaining after removal of hydroxyl groups from 1,4-butanediol.

Addition of only the modifier (a) composed of a polyacrylate resin to a polybutylene terephthalate resin may improve the impact resistance of the latter. While the modifier has good dispersing quality with polybutylene terephthalate, it is not well compatible with the latter, and therefore cracks may develop at or from the interface between the modifier and the resin. The addition of only the modifier (b) composed of a thermoplastic segment-type copolyester to the polybutylene terephthalate resin does not result in any significant improvement in impact resistance.

According to the present invention, however, the modifier (a) which is composed of a polyacrylate resin and the modifier (b) which is composed of a thermoplastic segment-type copolyester are added in combination, whereby the dispersing quality and compatibility of the modifiers are both improved, the impact resisting properties of the polybutylene terephthalate resin being thus synergistically improved.

The amount of addition of the modifier (a) composed of a polyacrylate resin as used for the purpose of the invention is

preferably more than 2 wt % relative to the entire system, and that of the modifier (b) composed of a thermoplastic segment-type copolyester is preferably more than 0.5 wt %. If such addition is less than the aforesaid level, the object of the invention may not be achieved to the fullest extent. Preferred ranges of such addition are 10 - 30 wt % with the modifier (a) composed of a polyacrylate resin and 3 - 30 wt % with the modifier (b) composed of a thermoplastic segment-type copolyester. It is noted, hoever, that if such additions are increased, greater impact strength may be obtained, but other mechanical properties may be worsened. Therefore, it is desirable that the total of both additions should not exceed 50 wt %. An optimum combination of the two modifiers is about 20 wt % of the modifier (a) composed of a polyacrylate resin and about 10 wt % of the modifier (b) composed of a thermoplastic segment-type copolyester.

The composition of the invention can be prepared in various conventional ways. For example, the resin component and modifiers of the invention may be extruded in admixture by an extruder into a composition in pellet form which can then be used for moulding. Alternatively, pellets having different compositions may be mixed prior to moulding, and then moulded into a composition according to the invention. Another method avalable is to charge individual components into the extruder.

It is also possible to add to the composition of the invention some other known agent such as an anti-static agent, coloring agent, lubricant, releasing agent, nucleating agent, stabilizer, flame retarding agent, reinforcing agent, other thermoplastic resin, or surface active agent, to impart any characteristics as required according to the purpose for which the composition is to be used.

The invention will be explained in further detail with reference to examples shown.

<u>Examples 1 - 15, with Ref. Examples 1 - 9</u>

With a polybutylene terephthalate resin is mixed a modifier (a) composed of polyacrylate resin ("Acryloid KM 330", produced by Rohm & Haas) and a modifier (b) composed of a thermoplastic segment-type copolyester ("Hytrel 4056", produced by du Pont) in various ratios

shown in the table below to prepare pellet-form compositions. The pellets were than moulded by a moulder into test specimens, and izod impact strength (notched) was measured. The measurements are shown in the table. It is noted that izod impact strength was measured in accordance with ASTM D25.

To show the advantageous effects of the invention more clearly, evaluation was made with sample compositions in which either the modifier (a) composed of a polyacrylate resin or the modifier (b) composed of a thermoplastic segment-type copolyester was omitted, and with one in which both modifiers were omitted, in the same manner as the examples. Measurements on those compositions are shown, for comparison's sake, together with the measurements on the examples.

| Example | PBT resin (Note 1) | Composition (wt %) Modifier (a) (Note 2) | Modifier (b) (Note 3) | Izod impact strength (Notched) (kg.cm/cm) |
|---|---|---|---|---|
| 1 | 90 | 5 | 5 | 10 |
| 2 | 85 | 5 | 10 | 12 |
| 3 | 75 | 5 | 20 | 12 |
| 4 | 65 | 5 | 30 | 20 |
| 5 | 85 | 10 | 5 | 12 |
| 6 | 80 | 10 | 10 | 13.6 |
| 7 | 70 | 10 | 20 | 12.9 |
| 8 | 60 | 10 | 30 | 60 |
| 9 | 75 | 20 | 5 | 17.3 |
| 10 | 70 | 20 | 10 | 93.1 |
| 11 | 60 | 20 | 20 | 73 |
| 12 | 50 | 20 | 30 | 60 |
| 13 | 65 | 30 | 5 | 20 |
| 14 | 60 | 30 | 10 | 23 |
| 15 | 50 | 30 | 20 | 60 |
| Reference | | | | |
| 1 | 100 | 0 | 0 | 3 |
| 2 | 95 | 0 | 5 | 4 |
| 3 | 90 | 0 | 10 | 4 |
| 4 | 80 | 0 | 20 | 5 |
| 5 | 70 | 0 | 30 | 7 |
| 6 | 95 | 5 | 0 | 6 |
| 7 | 90 | 10 | 0 | 9 |
| 8 | 80 | 20 | 0 | 14 |
| 9 | 70 | 30 | 0 | 14 |

Note 1. Polybutylene terephthalate resin.

Note 2. Polyacrylate resin ("Acryloid KM 330", produced by Rohm & Haas).

Note 3. Thermoplastic segment-type copolyester ("Hytrel 4056", produced by du Pont).

CLAIMS

1. A polybutylene terephthalate composition comprising a polybutylene terephthalate resin containing (a) a modifier composed of a polyacrylate resin, and (b) a modifier composed of a thermoplastic segment-type copolyester.

2. A composition as set forth in claim 1 wherein the addition of said modifier (a) is more than 2 wt % relative to the entire composition and the addition of said modifier (b) is more than 0.5 wt %, the total of both additions being not more than 50 wt %.

3. A composition as set forth in claim 1 or 3, wherein the polyacrylate resin of modifier (a) contains units derived from $C_1$~$C_6$ alkyl acrylate.

4. A composition as set forth in any of claims 1 to 3 wherein the polyacrylate in said modifier (a) is composed of a multi-stage polymer having a rubber-like first stage and a thermoplastically rigid final stage.

5. A composition as set forth in any of claims 1 to 4, wherein the rubber-like first stage of said modifier (a) is butyl acrylate and the final stage is methyl methacrylate, and wherein allyl methacrylate or diallyl maleate is used as a graft binder in the multi-stage polymer.

6. A composition as set forth in any of claims 1 to 5 wherein said modifier (b) is composed of a multiplicity of repeated long-chain ester units and short-chain ester units as bound together by head-to-tail linkage with respect to ester chains as a whole, and wherein said long-chain ester unit is expressed by the following formula

$$-\ OXO\ -\ \overset{\overset{O}{\|}}{C}\ -\ R\ -\ \overset{\overset{O}{\|}}{C}\ - \qquad (I)$$

and said short-chain ester unit is expressed by the following formula

$$-\ OYO\ -\ \overset{\overset{O}{\|}}{C}\ -\ R\ -\ \overset{\overset{O}{\|}}{C}\ - \qquad (II)$$

in which formulas (I) and (II), X represents a bivalent group remaining after removal of end hydroxyl groups from a polyalkylene oxide glycol having a melting point of about 60°C or below, a molecular weight of about 400 - 4000, and a carbon to oxygen ratio of about 2.5 - 4.3; R represents a bivalent group remaining after removal of carboxyl groups from a dicarboxylic acid having a molecular weight of about 300 or less, and Y represents a bivalent group remaining after removal of hydroxyl groups from a diol having a molecular weight of about 250 or less.

7. A composition as set forth in claim 6 wherein each or nearly every R in said modifier (b) is a group remaining after removal of carboxyl groups from terephthalic acid or a group remaining after removal of carboxyl groups from a mixture of terephthalic acid with isophthalic acid or phthalic acid, X is a group remaining after removal of end hydroxyl groups from a polytetramethylene oxide glycol having a molecular weight of about 600 - 2000, and each or nearly every Y having a molecular weight of 250 or below is a group remaining after removal of hydroxyl groups from 1,4-butanediol.

European Patent Office

# EUROPEAN SEARCH REPORT

0142336
Application number
EP 84 30 7724

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | GB-A-2 000 794 (GAF CO.)<br>*Claim 1*<br>--- | 1-3,6-7 | C 08 L 67/02 //<br>(C 08 L 67/02<br>C 08 L 51:00) |
| X | GB-A-2 000 797 (GAF CO.)<br>*Claims 1,5*<br>--- | 1-3,6-7 | |
| X | US-A-4 200 567 (T.D.GOLDMANN)<br>*Claim 1*<br>----- | 1-7 | |
| | | | TECHNICAL FIELDS SEARCHED (Int. Cl 4) |
| | | | C 08 L |

The present search report has been drawn up for all claims

| Place of search | Date of completion of the search | Examiner |
|---|---|---|
| THE HAGUE | 18-12-1984 | STIENON P.M.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document